# EUROPÄISCHE PATENTSCHRIFT

(11) **EP 0 911 616 B1**
(45) Veröffentlichungstag und Bekanntmachung des Hinweises auf die Patenterteilung: **29.08.2001**
(21) Anmeldenummer: 97810796.9
(22) Anmeldetag: 27.10.1997
(51) Int. Cl.: G01F 11/26, B65B 1/32, B05B 11/00, B05B 11/04

(54) **Flasche, insbesondere zur Reinigung von WC-Schüsseln**
Bottle, in particular for cleaning toilet bowls
Bouteille, en particulier pour nettoyer des cuvettes de w.c.

(43) Veröffentlichungstag der Anmeldung: 28.04.1999
(73) Patentinhaber: Alpla Werke Alwin Lehner GmbH & CO. KG, 6971 Hard (AT)
(72) Erfinder: Künz, Hans, 6971 Hard (AT)
(74) Vertreter: Riederer, Conrad A., Dr.

(56) Entgegenhaltungen:
- EP-A- 0 015 560
- DE-A- 3 531 568
- GB-A- 2 227 228
- US-A- 2 233 996
- US-A- 3 107 031
- US-A- 5 301 845
- US-A- 5 558 257

## Beschreibung

Die Erfindung betrifft eine Spritzflasche, insbesondere zur Reinigung von WC-Schüsseln, mit einem quetschbaren Flaschenkörper und einem Ausgussteil, welches eine in einem Winkel zur Senkrechten angeordneten Austrittsöffnung aufweist, mit einer Leitung, welche durch ein einstückig mit dem Flaschenkörper gefertigten Rohr gebildet ist und vom Bodenbereich der Flasche zum Ausgussteil führt.

Die US-B-3,107,031 offenbart Behälter aus Kunststoff bzw. Metall in dessen Inneren ein Rohr angeordnet ist, das zuerst parallel zum Boden verläuft und dann nach oben zu einem Ausguss führt. Wenn der Behälter aufrecht steht, wird praktisch nur der parallel verlaufende Basisteil des Rohrs mit Flüssigkeit gefüllt, weil der im Luftraum über dem Flüssigkeitsspiegel entstehende Unterdruck den Anstieg der Flüssigkeit im Rohr begrenzt. Wird nun der Behälter gekippt, kann die im Rohr befindliche Flüssigkeitsmenge in einem kontinuierlichen Strom ausfliessen. Mit diesem Behälter ist eine grobe Dosierung möglich. Die Dosiermenge kann aber etwas variieren, je nachdem, ob sich im Behälter viel oder wenig Flüssigkeit befindet und somit die Werte des hydrostatischen Drucks der Flüssigkeit und des Unterdrucks im Luftraum über der Flüssigkeit ändern. Eine Vergrösserung oder Verkleinerung der Dosiermenge kann nur durch Aenderung der Länge und/oder des Durchmessers des Basisteils erzielt werden.

Im Gegensatz zum beschriebenen Behälter, der nur zum Ausgiessen, aber nicht zum Spritzen von Flüssigkeit konzipiert ist, stellen die nachfolgend beschriebenen Flaschen Spritzflaschen dar.

Die DE-A-35 31 568 offenbart eine zusammendrückbare Kunststoffflasche mit einem Sprühmundstück und einem einstückig am Flaschenkörper angeformten Steigrohr, welches zum Sprühmundstück führt, welches zusätzlich noch mit dem sich über der Flüssigkeit befindlichem Luftraum in Verbindung steht. Wird die Flasche gepresst, so werden im Sprühmundstück Flüssigkeit und Luft miteinander vermischt und es entsteht ein feiner Sprühnebel. Als nachteilig erweist sich, dass diese Spritzflasche keine Dosierung erlaubt. Auch kann mit dieser Flasche nicht mit nach unten gerichtetem Sprühmundstück gesprüht werden.

Die US-B-5,301,845 beschreibt eine Quetschflasche mit einem im Flascheninnern angeordnetem Steigrohr, welches unten ein Ventil aufweist und mit einer Skala versehen ist. Wird die Flasche gequetscht, so öffnet sich das Ventil und Flüssigkeit wird im Steigrohr nach oben gedrückt, wobei die geförderte Flüssigkeitsmenge an der Skala abgelesen werden kann. Wird dann die Flasche gekippt, so kann die dosierte Flüssigkeitsmenge durch Quetschen der Flasche ausgestossen werden. Als nachteilig erweist sich, dass mit dieser Flasche nur klare Flüssigkeiten dosiert werden können. Auch kann die Flasche nicht praktisch vollständig entleert werden, was Probleme bei der Wiederverwertung oder Entsorgung darstellen kann. Auch erweist sich die Herstellung relativ teuer wegen der Notwendigkeit des Einsetzens von Steigrohr und Ventilen.

Durch die DE-A-31 21 591 ist seit mehr als fünfzehn Jahren eine Quetschflasche zur Reinigung von WC-Schüsseln bekannt, mit welcher sowohl ein nach oben gerichteter als auch ein nach unten gerichteter Flüssigkeitsstrahl erzeugt werden kann. Zu diesem Zweck ist die Quetschflasche innen mit einer eine Ueberlaufkante aufweisenden Trennwand versehen. An die dadurch abgetrennte kleine Kammer ist ein Ausgussteil mit einem Tauchröhrchen angeschlossen, welches bis auf den Grund der Kammer ragt. Durch Kippen der Flasche kann die Kammer mit der im Hauptteil der Flasche vorhandenen Flüssigkeit jeweils wieder nachgefüllt werden, wie dies im Prinzip durch die US-A-570,759 bekannt ist. Die Flasche nach der DE-31 21 591 hat jedoch den Nachteil, dass sie in waagrechter oder mit dem Ausgussteil nach unten gerichteter Gebrauchlage keine Dosierung erlaubt. Wegen der besonderen Formgebung der Flasche bietet auch deren Abfüllung gewisse Probleme. Insbesondere wird zum Abfüllen relativ viel Zeit benötigt. Der letztere Nachteil wird bei der Quetschflasche gemäss der EP-A-0 753 355 vermieden, weil bei dieser Flasche der Abfüllstutzen tief in das Flascheninnere ragen kann. Nachteilig ist jedoch, dass diese Flasche eine relativ teure Einbaute benötigt, um eine Dosierkammer zu bilden.

Die DE-A-41 39 534 offenbart eine Quetschflasche, welche im Gegensatz zur Flasche gemäss der DE-A-31 21 591 auch bei voller Flasche in der waagrechten Gebrauchslage ein Dosieren erlaubt. Die Quetschflasche besitzt eine Einbaute, welche die Dosierkammer bildet. Ein Steigrohr führt in einem Winkel zur Senkrechten nach aussen. Bei mit dem Ausgussteil nach unten gerichteter Gebrauchslage ist jedoch ein Dosieren nicht möglich.

Die letzgenannten drei Spritz flaschen haben den weiteren Nachteil, dass mit ihnen nur dann nach oben gespritzt werden kann, wenn die Flasche waagrecht oder mit dem Flaschenkörper schräg nach unten gerichtet gehalten wird. Wenn somit gewünscht wird, den oberen Rand der WC-Schüssel zu reinigen, muss, je nach der Ausbildung der Flasche, diese mehr oder weniger tief in die WC-Schüssel abgesenkt werden, wobei die Gefahr besteht, dass man mit der Flasche und/oder der Hand die schmutzige Innenwandung der Schüssel berührt. Ein weiterer Nachteil der bekannten Flaschen besteht darin, dass diese nur einen relativ dünnen Strahl erzeugen, so dass erhebliches Geschick notwendig ist, um mit möglichst wenig Flüssigkeit eine gute Reinigung zu erzielen. Wenn nämlich ein dünner Flüssigkeitsstrahl an der Innenwandung der WC-Schüssel auftrifft, so hat die auftreffende Flüssigkeit die Tendenz rasch in einem schmalen Strom nach unten zu fliessen.

Es ist daher Aufgabe der vorliegenden Erfindung eine Flasche mit einem Ausgussteil zu schaffen, welche die geschilderten Nachteile mindestens teilweise vermeidet. Insbesondere soll beim Spritzen nach oben die Flasche so gehalten werden können, dass keine Gefahr besteht, mit der Hand oder der Flasche die Innenwandung der WC-Schüssel zu berühren. Auch soll ein Dosieren der Flüssigkeit für diese Gebrauchslage der Flasche möglich sein.

Ausgehend vom Stand der Technik gemäss der DE-A-35 31 568 wird dies erfindungsgemäss durch eine Flasche mit den Merkmalen gemäss Anspruch 1 erreicht. Diese Flasche kann um mehr als 90 Grad gekippt werden, um einen Strahl in einem Winkel nach oben zu erzeugen. In dieser Gebrauchslage befindet sich somit die Hand des Benützers der Flasche über der WC-Schüssel. Die Flasche ermöglicht auch ein Dosieren der Reinigungsflüssigkeit für diese Gebrauchslage. Dies wiederum gestattet eine sparsame Verwendung der Reinigungsflüssigkeit. Von Vorteil ist auch, dass die Flasche problemlos gefüllt werden kann.

Zweckmässigerweise ist das Rohr aussen am Flaschenkörper angeordnet, was eine besonders einfache Herstellung der Flasche ermöglicht. Bei der Anordnung des Rohrs aussen am Flaschenkörper kann es über einen Steg mit dem Flaschenkörper verbunden bleiben. Es ist möglich, das Rohr aus durchsichtigem oder durchscheinendem, Material zu bilden, den Flaschenkörper aber aus einem anderen, z.B. undurchsichtigen oder andersfarbigen Material. Beim Rohr wird vorteilhaft eine Gradierung vorgesehen, damit dieses zum Dosieren auch bloss bis zu einer gewünschten Marke gefüllt werden kann.

Das Ausgussteil kann ein abgekröpftes Ausgussrohr besitzen. Dieses kann so gestaltet und dimensioniert werden, dass eine bequeme Reinigung des Schüsselrandes möglich ist.

Von besonderem Vorteil hat die Austrittsöffnung die Form eines Schlitzes. Damit kann ein fächerartiger Strahl erzeugt werden. Ein solcher Strahl hat nicht die Tendenz, an der Innenwandung der WC-Schüssel in Form eines schmalen Stromes abzufliessen und ermöglicht daher eine sparsame Verwendung der Reinigungsflüssigkeit. Der Schlitz ist zweckmässigerweise waagrecht angeordnet. Es ist aber auch eine andere Anordnung möglich. Statt einen Schlitz vorzusehen können auch eine Anzahl von Löchern vorgesehen werden.

Ein Ausführungsbeispiel der Erfindung wird nun unter Bezugnahme auf die Zeichnung beschrieben. Es zeigt:
- Fig. 1: die Flasche im Einsatz zur Reinigung einer WC-Schüssel,
- Fig.2: Flasche im Querschnitt,
- Fig.3: ein Ausführungsbeispiel eines Ausgussteils mit Verschlusskappe,
- Fig.4: ein weiteres Ausführungsbeispiel eines Ausgussteils.

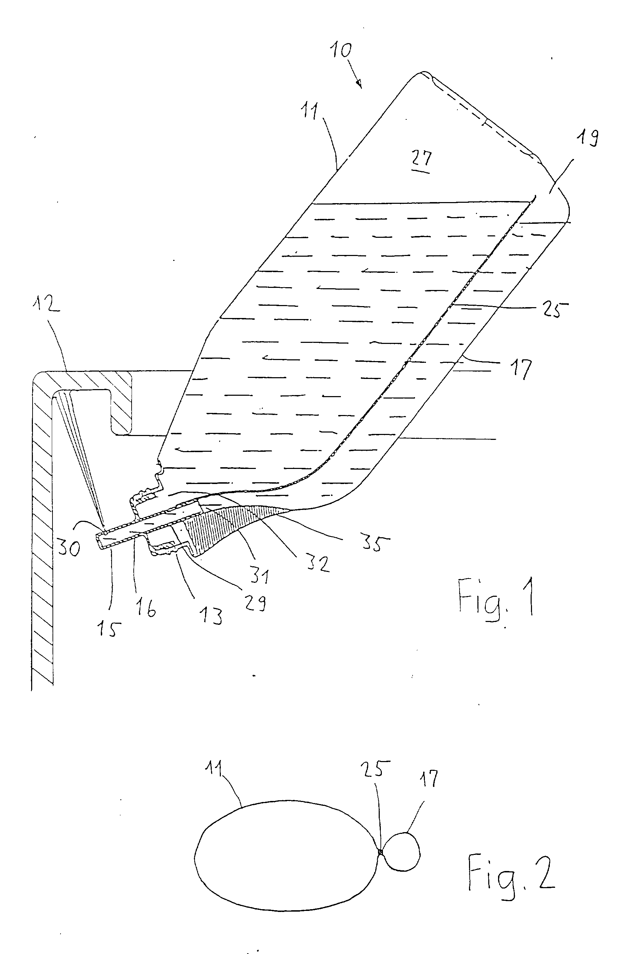

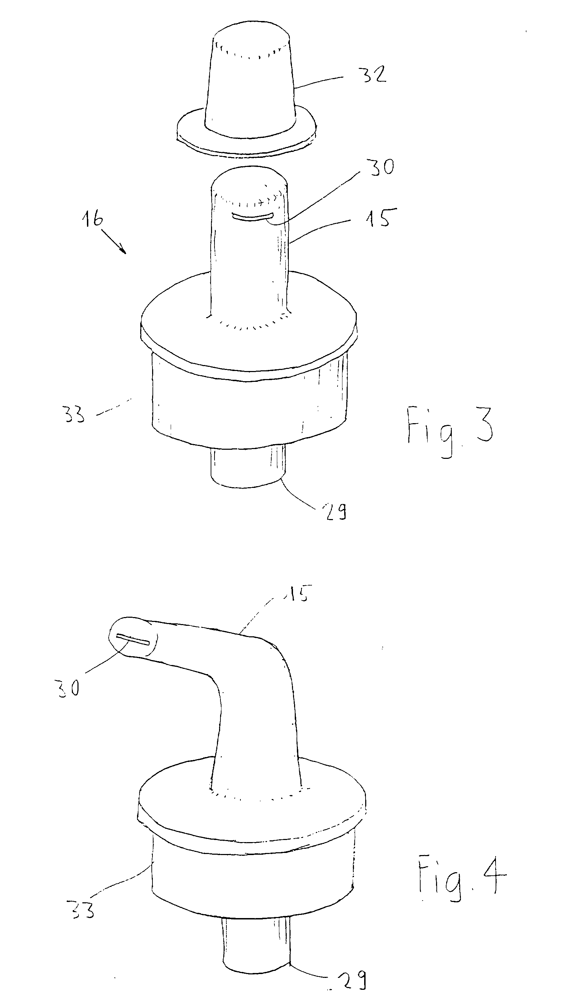

Wie die Figuren 1 und 2 zeigen, besteht die Flasche 10 im wesentlichen aus einem Flaschenkörper 11 und einem Ausgussteil 16. Der Flaschenkörper 11 ist ein im Blasverfahren hergestellter Hohlkörper aus flexiblem Kunststoff. Die Form sollte so sein, dass die Flasche leicht mit einer Hand gehalten werden kann. Als vorteilhaft erweist sich ein ovaler Querschnitt. Es kann aber auch ein anderer Querschnitt gewählt werden, der eine ausreichende Federkraft garantiert, um nach dem Quetschen der Flasche diese wieder in die ursprüngliche Form zurückzuführen. Einstückig mit dem Flaschenkörper 11 ist ein Rohr 17 ausgebildet, welches mit dem Flaschenkörper 11 durch einen Steg 25 verbunden ist. Dieses Rohr 17 ist zweckmässigerweise durchsichtig oder durchscheinend, wobei aber der Flaschenkörper 11 selbst aus einem anderen, z.B. undurchsichtigem oder farbigem Material bestehen kann, wie dies bereits von Flaschen mit Füllstandanzeigen bekannt ist. Das Rohr 17 kommuniziert mit dem unteren Ende 19 mit dem Inneren 27 des Flaschenkörpers 11 und erstreckt sich nach oben zum Ausgussteil 16 hin. Das Ausgussteil 16, welches in Figur 3 in der Perspektive dargestellt ist, schliesst den Stutzen 13 ab. Das Volumen des Rohrs 17 ist entsprechend der maximal geforderten Dosiermenge bemessen. Je nach der geforderten Dosiermenge kann also das Rohr 17 einen relativ kleinen oder einen relativ grossen Querschnitt aufweisen. Eine Graduierung oder Skala kann vorgesehen sein, um eine gewünschte Teilmenge abzumessen. Die Flasche 10 weist zwei Oeffnungen 31,32 auf. Eine der Oeffnungen wird durch das obere Ende 31 des Rohrs 17 gebildet. Die zweite Oeffnung 32 dient dem bequemen Füllen der Flasche. Mit der Bezugsziffer 35 ist eine Verstärkungsrippe bezeichnet.

Ein erstes Ausführungsbeispiel eines Ausgussteils 16 ist in Figur 3 dargestellt. Dieses Ausgussteil 16 besteht aus Kunststoff und besitzt einen Flansch 33, welcher den Stutzen 13 (Fig.1) abschliesst und einen rohrförmigen Ansatz 29, der beim Aufsetzen des Ausgussteils 16 eine Verbindung mit dem Rohr 17 (Fig.1) schafft. Die sich nach aussen erstreckende Verlängerung 15 des Rohrs 29 ist an ihrem Ende abgeschlossen und besitzt seitlich eine Austrittsöffnung oder Düse vorteilhaft in Form eines Schlitzes 30. Statt eines Schlitzes könnten auch mehrere Oeffnungen vorgesehen werden. Vorteilhaft verläuft der Schlitz 30 oder eine Reihe von Oeffnungen praktisch waagrecht. Mit einer Kappe 32 oder einem anderen geeigneten Verschluss kann die Düse 30 verschlossen werden.

Die zweite Ausführungsform des Ausgussteils gemäss Figur 4 unterscheidet sich vom Ausgussteil nach Figur 3, dass sie eine abgekröpfte Verlängerung 15 des Rohrs 29 besitzt.

In gewissen Fällen erscheint es zweckmässig, für die zweite Oeffnung 32 ein Rückschlagventil vorzusehen, wie dies in der älteren nicht vorveröffentlichten europäischen Patentanmeldung EP-A-0 875 461 beschrieben wird.

Beim Gebrauch der Flasche zur Reinigung einer WC-Schüssel 12 wird die Flasche mit der Hand erfasst und in die in Figur 1 gezeigte Lage verschwenkt. Wenn die Flasche eine ungefähr waagrechte Stellung erreicht hat, fliesst Flüssigkeit in das Rohr 17. Wird die Flasche weiter in die in Figur 1 gezeigte Gebrauchslage verschwenkt, kann keine Flüssigkeit mehr in das Rohr 17 fliessen. Wird nun die Flasche gequetscht, so wird lediglich der Inhalt des Rohrs 17 entleert. Auf diese Weise wird somit eine Dosierung gewährleistet. Es ist auch möglich, das Rohr 17 nur teilweise zu füllen.

Es ist ersichtlich, dass beim Spritzen die Hand des Benützers nicht in die WC-Schüssel 12 abgesenkt werden muss.

Beim Quetschen der Flasche entsteht ein fächerförmiger Strahl, der in einem Winkel nach oben gerichtet ist. Damit lässt sich auch gut der obere Rand der WC-Schüssel reinigen, wobei die Flüssigkeit gut verteilt nach unten fliessen und so die ganze Schüsselinnenfläche reinigen kann.

Es sind verschiedene Aenderungen möglich, ohne vom Gegenstand der Erfindung abzuweichen. So braucht die Flasche nicht unbedingt als Quetschflasche ausgebildet sein. Von Bedeutung ist lediglich, dass ein genügender Druck zur Bildung des gewünschten Flüssigkeitsstrahls zur Verfügung steht, wobei zur Erzeugung des Drucks die im Stand der Technik bekannte Massnahmen Verwendung finden können. Aus praktischen und ökonomischen Gründen erweist sich dazu die Ausbildung der Flasche als Quetschflasche besonders zweckmässig.

Bei der in Fig.1 dargestellten Flasche ist der Stutzen 13 in einem spitzen Winkel zur Flaschenachse angeordnet. Es ist aber durchaus möglich, eine Flasche mit senkrecht angeordneten Stutzen zu verwenden.

## Patentansprüche

1. Spritzflasche aus Kunststoff, insbesondere zur Reinigung von WC-Schüsseln, mit einem quetschbaren Flaschenkörper (11) und einem Ausgussteil (16), welches eine in einem Winkel zur Senkrechten angeordnete Austrittsöffnung (30) aufweist, mit einer Leitung (17), welche durch ein einstückig mit dem Flaschenkörper gefertigtes Rohr (17) gebildet ist und vom Bodenbereich der Flasche zum Ausgussteil (30)führt, **dadurch gekennzeichnet**, dass das Rohr (17) aus durchsichtigem oder durchscheinendem Material besteht und von dem Teil des Bodenbereichs wegführt, der auf der der Austrittsöffnung (30) entgegengesetzten Seite der Flasche liegt, und dass das Hohlvolumen der Leitung (17) entsprechend der maximal geforderten Dosiermenge dimensioniert ist.

2. Spritzflasche nach Anspruch 1, **dadurch gekennzeichnet**, dass das Rohr (17) aussen am Flaschenkörper angeordnet ist.

3. Spritzflasche nach Anspruch 1 oder 2, **dadurch gekennzeichnet**, dass das Rohr (17) eine Graduierung aufweist.

4. Spritzflasche nach einem der Ansprüche 1 bis 3, **dadurch gekennzeichnet**, dass die Austrittsöffnung die Form eines Schlitzes (30) oder eine Anzahl von Löchern aufweist.

5. Spritzflasche nach Anspruch 4, **dadurch gekennzeichnet**, dass der Schlitz (30) bzw. eine Reihe von Löchern praktisch waagrecht verläuft.

6. Spritzflasche nach einem der Ansprüche 1 bis 5, **dadurch gekennzeichnet**, dass das Ausgussteil (16) ein abgekröpftes Ausgussrohr (15) besitzt.

## Claims

1. Spraying bottle made of plastic, in particular for cleaning WC bowls, with a compressible body (11) and a nozzle part (16) having an outlet (30) arranged at an angle to the vertical, with a conduit (17) formed by a tube (17) fabricated integrally with the bottle body and leading from the base area of the bottle to the nozzle (30) [*sic*], **characterised in that** the tube (17) consists of transparent or translucent material and leads away from the part of the base area located on the side of the bottle opposite to the outlet (30), and in that the hollow volume of the conduit (17) is dimensioned to correspond to the maximum required metered quantity.

2. Spraying bottle according to Claim 1, **characterised in that** the tube (17) is arranged on the outside of the bottle body.

3. Spraying bottle according to Claim 1 or 2, **characterised in that** the tube (17) has a graduation.

4. Spraying bottle according to one of Claims 1 to 3, **characterised in that** the outlet has the form of a slot (30) or a number of holes.

5. Spraying bottle according to Claim 4, **characterised in that** the slot (30) or series of holes runs substantially horizontally.

6. Spraying bottle according to one of Claims 1 to 5, **characterised in that** the nozzle part (16) has an outlet pipe forming a bend (15).

## Revendications

1. Bouteille à projection en matière plastique, destinée notamment au nettoyage de cuvettes de WC, comprenant un corps de bouteille compressible (11) et un élément verseur (16) présentant un orifice de sortie (30) disposé dans un angle par rapport à la verticale, avec un canal (17) constitué par un tube (17) solidaire du corps de bouteille et s'étendant de la zone de fond de la bouteille jusqu'à l'élément verseur (30), **caractérisée en ce que** le tube (17) est réalisé à partir d'un matériau transparent ou translucide et qu'il s'éloigne de la partie de la zone de fond située sur la face de bouteille opposée à l'orifice de sortie (30), et en ce que le volume creux du canal (17) est dimensionné en fonction de la quantité de dosage maximale requise.

2. Bouteille à projection selon la revendication 1, **caractérisée en ce que** le tube (17) est disposé à l'extérieur du corps de bouteille.

3. Bouteille à projection selon la revendication 1 ou 2, **caractérisée en ce que** le tube (17) présente une graduation.

4. Bouteille à projection selon l'une des revendications 1 à 3, **caractérisée en ce que** l'orifice de sortie présente la forme d'une fente (30) ou un certain nombre de trous.

5. Bouteille à projection selon la revendication 4, **caractérisée en ce que** la fente (30) ou une rangée de trous s'étendent sensiblement horizontalement.

6. Bouteille à projection selon l'une des revendications 1 à 5, **caractérisée en ce que** l'élément verseur (16) possède un tube verseur (15) coudé.
